# FASCICULE DE BREVET EUROPEEN

(11) **EP 0 621 425 B1**
(45) Date de publication et mention de la délivrance du brevet: **15.01.1997**
(21) Numéro de dépôt: 94490005.9
(22) Date de dépôt: 04.03.1994
(51) Int. Cl.: F16K 5/04, F16K 27/06

(54) **Robinet à tournant cylindrique**
Hahn
Plug valve

(30) Priorité: 22.04.1993 FR 9304979
(43) Date de publication de la demande: 26.10.1994
(73) Titulaire: WATTS S.F.R. S.A., F-80390 Fressenneville (FR)
(72) Inventeur: Huveteau, Jean Louis, F-80130 Friville Escarbotin (FR); Line, Gérard, F-80130 Friville Escarbotin (FR)
(74) Mandataire: Ecrepont, Robert

(56) Documents cités:
- EP-A- 0 529 186
- DE-A- 1 959 083
- US-A- 2 433 732
- US-A- 4 807 666

## Description

L'invention se rapporte à un robinet à tournant cylindrique.

Classiquement un robinet à tournant cylindrique (DE-A-1959083) comprend :
- un corps délimitant un logement cylindrique de révolution présentant dans sa paroi des orifices dits externes auxquels aboutissent une conduite dite d'entrée et au moins une conduite de sortie les dites conduites étant dites d'entrée et de sortie par référence au sens de circulation d'un fluide,
- un obturateur qui prenant place dans le logement précité avec un faible jeu de fonctionnement comporte une chambre interne débouchant au niveau de la face externe de l'obturateur par au moins deux orifices dits internes qui sont positionnés de manière telle que, dans une orientation singulière de l'obturateur, au moins certains des orifices internes de celui-ci se trouvent en vis à vis d'au moins certains des orifices externes du corps du robinet,
- des moyens d'étanchéité disposés entre l'obturateur et le logement,
- un moyen de manoeuvre de l'obturateur porté au moins indirectement par l'une dite proximale des extrémités proximale et distale de l'obturateur et
- des moyens de verrouillage de l'obturateur dans son logement.

Sur les robinets connus à ce jour, l'obturateur est engagé selon l'axe longitudinal du logement et maintenu en place dans celui-ci par une plaque qui, rapportée sur le corps du robinet par tous moyens connus, comprend une découpe permettant le passage d'une fraction des moyens de manoeuvre, tels un arbre associant l'obturateur à une poignée de manoeuvre.

Pour permettre le passage de l'arbre au travers de la découpe de la plaque, il est nécessaire que l'une des pièces que sont l'obturateur et la poignée soit fixée de manière démontable à l'arbre ou bien encore que la plaque puisse être scindée en deux parties.

De tels dispositifs requièrent des temps d'assemblage importants en raison de la multiplicité des pièces ainsi que la mise en place de garnitures d'étanchéité entre la plaque et le corps.

Une autre difficulté de ce type de robinet à tournant réside dans la difficulté de réalisation de l'étanchéité entre le corps et l'obturateur notamment lorsqu'on souhaite intégrer un joint d'étanchéité à la paroi courbe du tournant.

Egalement, il est impossible de vérifier l'étanchéité du robinet.

Un des résultats que l'invention vise à obtenir est un robinet à tournant cylindrique du type précité qui remédie aux inconvénients précités.

A cet effet, l'invention a pour objet un tel robinet notamment caractérisé en ce que :
- l'extrémité distale de l'obturateur présente un orifice axial de sortie interne et
- le logement débouche à l'extérieur du corps par ses deux extrémités de sorte que la chambre, par l'orifice interne placé à l'extrémité distale de l'obturateur, communique toujours avec l'une des extrémités ouvertes du logement.

L'invention sera bien comprise à l'aide de la description ci-après faite à titre d'exemple non limitatif, en regard du dessin qui représente schématiquement :

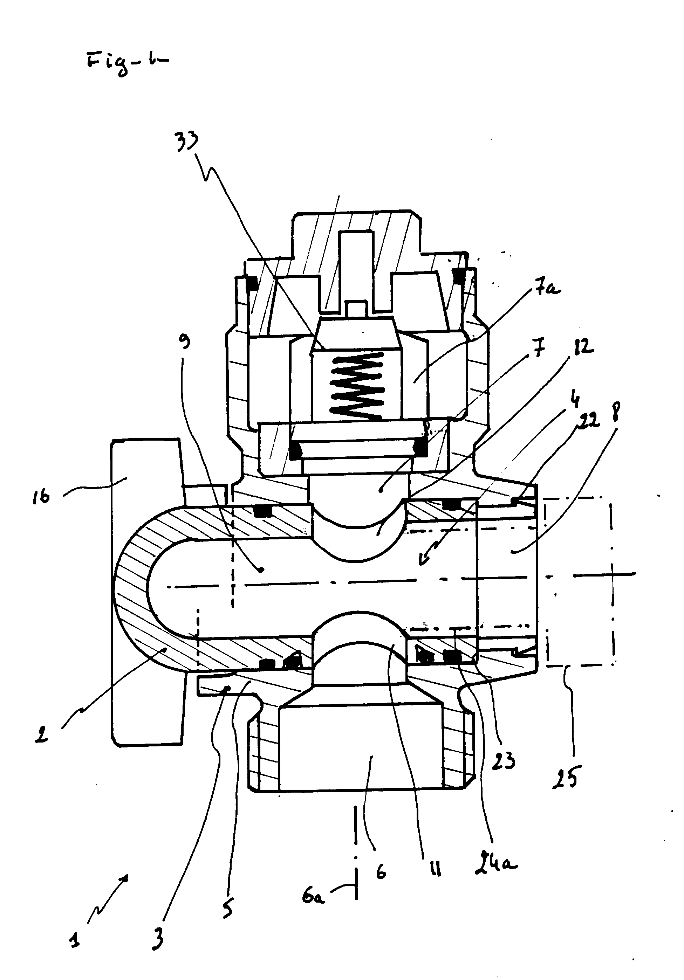

- figure 1 : un robinet vu en coupe axiale,
- figure 2 : l'obturateur vu de face,

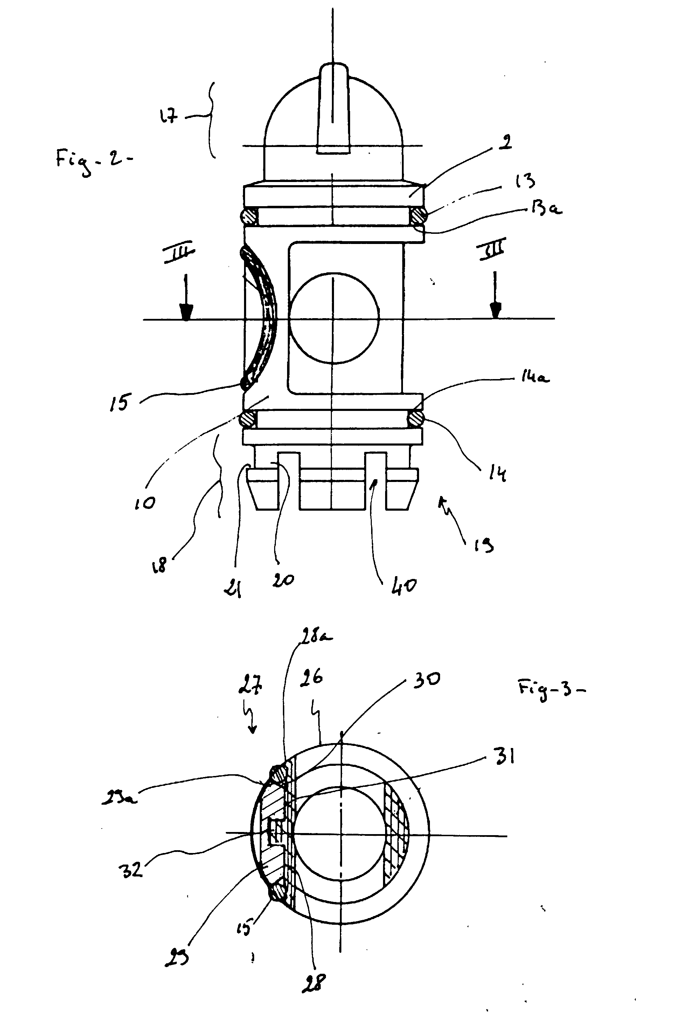

- figure 3 : une coupe selon III-III de la figure 2.

En se reportant au dessin, on voit un robinet 1 à tournant cylindrique 2 comprenant :
- un corps 3 délimitant un logement 4 cylindrique de révolution présentant dans sa paroi 5 des orifices 6, 7, 8 dits externes auxquels aboutissent une conduite 6a dite d'entrée et au moins une conduite 7a de sortie, les dites conduites étant dites d'entrée et de sortie par référence au sens de circulation d'un fluide,
- un obturateur 2 qui prenant place dans le logement 4 précité avec un faible jeu de fonctionnement comporte une chambre 9 interne débouchant au niveau de la face externe 10 de l'obturateur par au moins deux orifices 11, 12 dits internes qui sont positionnés de manière telle que dans une orientation singulière de l'obturateur 2, dite position ouverte, au moins certains des orifices 11, 12 internes de celui-ci se trouvent en vis à vis d'au moins certains des orifices 6, 7 externes du corps du robinet de sorte qu'un fluide peut circuler depuis la conduite d'entrée vers la conduite de sortie,
- des moyens 13, 14, 15 d'étanchéité disposés entre l'obturateur 2 et le logement 4,
- un moyen 16 de manoeuvre de l'obturateur 2 porté au moins indirectement par l'une 17 dite proximale des extrémités 17, 18 proximale et distale de l'obturateur 2 et
- des moyens 19 de verrouillage de l'obturateur 2 dans son logement 4.

Classiquement, la rotation de l'obturateur autour de l'axe longitudinal 20 du logement 4 permet d'amener celui-ci vers au moins une autre position dite "fermée" où l'orifice interne de l'obturateur se trouve totalement écarté de l'orifice externe d'entrée de sorte que le fluide provenant de l'amont cesse de circuler.

Classiquement, les moyens 13, 14, 15 d'étanchéité comprennent au moins un joint 13, 14 torique logé partiellement dans une gorge 13a, 14a qui s'étend dans un plan perpendiculaire à l'axe de rotation de l'obturateur.

Par exemple, ces gorges 13a, 14a sont formées dans l'alésage du corps du robinet ou sont, de préférence, présentées par l'obturateur lui-même.

Avantageusement, chacune des extrémités distale et proximale de l'obturateur porte un tel joint d'étanchéité 13, 14.

Dans une variante de réalisation, le robinet comporte plusieurs conduites de sortie et donc autant d'orifices externes de sortie.

Les moyens 19 de verrouillage de l'obturateur dans son logement sont portés par l'extrémité 18 dite distale de l'obturateur.

Les moyens 19 de verrouillage comprennent au moins une patte 20 qui, parallèle à l'axe longitudinal de l'obturateur 2, porte au moins une butée 21 de verrouillage qui s'engage élastiquement derrière une portée 22 d'appui que comporte le logement 4, ce logement 4 présentant, par ailleurs, des moyens 23 limitant l'engagement de l'obturateur à une valeur juste suffisante pour permettre à la butée de verrouillage de s'engager derrière cette portée d'appui.

Avantageusement, les moyens 19 de verrouillage comprennent plusieurs pattes 20 qui, portant chacune au moins une butée de verrouillage, sont disposées concentriquement à l'axe de rotation de l'obturateur.

Cela permet de réaliser en une seule pièce à la fois l'obturateur, le moyen de manoeuvre et les moyens de verrouillage.

Il devient alors trés facile de mettre en place cet obturateur sans outil de montage et il est alors quasi-indémontable par une personne malveillante

Selon l'invention :
- l'extrémité distale 18 de l'obturateur 2 présente un orifice axial de sortie interne 40 et,
- le logement débouche à l'extérieur du corps par ses deux extrémités de sorte que la chambre 9, par l'orifice interne placé à l'extrémité distale 18 de l'obturateur, communique toujours avec l'une des extrémités ouvertes du logement.

Par cette extrémité distale 18, on peut contrôler facilement l'étanchéité du robinet.

L'extrémité distale 18 de l'obturateur porte directement une fraction d'un moyen 24 d'assemblage amovible d'une pièce supplémentaire 25 telle l'extrémité d'une conduite de sortie supplémentaire ou un bouchon ou bien encore une purge.

Dans une forme de réalisation, le moyen d'assemblage 24 consiste en un système vis et écrou et la fraction de ce système que comprend l'extrémité distale de l'obturateur est un taraudage.

Outre les joints 13, 14 d'étanchéité placés aux extrémités de l'obturateur, la surface courbe 26 de l'obturateur comprend un joint torique supplémentaire 15 d'étanchéité qui, épousant la dite surface courbe, est maintenu sur celle-ci par des moyens 27 de fixation.

Selon l'invention, les moyens 27 de fixation du joint torique supplémentaire 15 comprennent une empreinte 28 qui, formée dans l'épaisseur de l'obturateur, est apte à loger une plaque 29 de forme sensiblement complémentaire lesquelles empreinte 28 et plaque 29 ont leurs bords 28a, 29a externes conformés de manière à former une gorge 30 dont l'entrée est retrécie en largeur afin d'être apte à y retenir le joint supplémentaire lorsque la plaque est assemblée avec l'empreinte.

Avantageusement, le fond 31 de l'empreinte 28 est sensiblement plat sauf dans une zone qui est pourvue de moyens 32 de positionnement de la plaque, tels une nervure coopérant avec une rainure ou vice versa.

Ceci permet de fixer facilement un joint torique sur une paroi courbe sans que cela présente de difficultés importantes pour la réalisation de la gorge qui, pour maintenir le joint, doit avoir une section spécifique.

La plaque peut être fixée par collage ou par soudage.

Par exemple, la position du joint supplémentaire sur l'obturateur est choisie de telle sorte que, lorsque l'obturateur est en position fermée, ce joint encadre l'orifice externe d'entrée de sorte que la conduite d'entrée est totalement isolée du reste du robinet.

Par exemple, la conduite de sortie est pourvue d'une soupape 33 de décharge contrôlant le passage du fluide vers cette conduite de sortie au delà d'une pression déterminée dans la chambre interne.

## Revendications

1. Robinet à tournant cylindrique comprenant :
- un corps (3) délimitant un logement (4) cylindrique de révolution présentant dans sa paroi (5) des orifices (6, 7, 8) dits externes auxquels aboutissent une conduite (6a) dite d'entrée et au moins une conduite (7a) de sortie, les dites conduites étant dites d'entrée et de sortie par référence au sens de circulation d'un fluide,
- un obturateur (2) qui prenant place dans le logement (4) précité avec un faible jeu de fonctionnement comporte une chambre (9) interne débouchant au niveau de la face externe (10) de l'obturateur par au moins deux orifices (11, 12) dits internes qui sont positionnés de manière telle que dans une orientation singulière de l'obturateur (2), dite position ouverte, au moins certains des orifices (11, 12) internes de celui-ci se trouvent en vis à vis d'au moins certains des orifices (6, 7) externes du corps du robinet de sorte qu'un fluide peut circuler depuis la conduite d'entrée vers la conduite de sortie,
- des moyens (13, 14, 15) d'étanchéité disposés entre l'obturateur (2) et le logement (4),
- un moyen (16) de manoeuvre de l'obturateur (2) porté au moins indirectement par l'une (17) dite proximale des extrémités (17, 18) proximale et distale de l'obturateur (2) et
- des moyens (19) de verrouillage de l'obturateur (2) dans son logement (4) qui sont portés par l'extrémité (18) dite distale de l'obturateur,
ce robinet étant **CARACTERISE** en ce que
- l'extrémité distale (18) de l'obturateur (2) présente un orifice axial de sortie interne (40) et
- le logement débouche à l'extérieur du corps par ses deux extrémités de sorte que la chambre (9), par l'orifice interne placé à l'extrémité distale (18) de l'obturateur, communique toujours avec l'une des extrémités ouvertes du logement.

2. Robinet selon la revendication 1 **caractérisé** en ce que l'extrémité distale (18) de l'obturateur porte directement une fraction d'un moyen (24) d'assemblage amovible d'une pièce supplémentaire (25).

3. Robinet selon la revendication 1 qui, outre les joints (13, 14) d'étanchéité placés aux extrémités de l'obturateur, porte sur la surface courbe (26) de l'obturateur un joint torique supplémentaire (15) d'étanchéité qui, épousant la dite surface courbe, est maintenu sur celle-ci par des moyens (27) de fixation **caractérisé** en ce que les moyens (27) de fixation du joint torique supplémentaire (15) comprennent une empreinte (28) qui, formée dans l'épaisseur de l'obturateur, est apte à loger une plaque (29) de forme sensiblement complémentaire lesquelles empreinte (28) et plaque (29) ont leurs bords (28a, 29a) externes conformés de manière à former une gorge (30) dont l'entrée est retrécie en largeur afin d'être apte à y retenir le joint supplémentaire lorsque la plaque est assemblée avec l'empreinte.

4. Robinet selon la revendication 3 **caractérisé** en ce que le fond (31) de l'empreinte (28) est sensiblement plat sauf dans une zone qui est pourvue de moyens (32) de positionnement de la plaque, tels une nervure coopérant avec une rainure.

5. Robinet selon la revendication 3 ou 4 **caractérisé** en ce que la position du joint supplémentaire sur l'obturateur est choisie de telle sorte que, lorsque l'obturateur est en position fermée, ce joint encadre l'orifice externe d'entrée de sorte que la conduite d'entrée est totalement isolée du reste du robinet.

## Patentansprüche

1. Zylinderhahn mit:
- einem Korpus (3), in dem ein zylinderförmiges Drehlager (4) ausgebildet ist, welches in seiner Wandung (5) als äußere bezeichnete Öffnungen (6, 7, 8) aufweist, in welche eine als Zulaufleitung bezeichnete Leitung (6a) und mindestens eine Austrittsleitung (7a) einmünden, wobei die Leitungen als Zulauf- und Austrittsleitungen bezüglich der Strömungsrichtung eines Strömungsmittels bezeichnet sind,
- einem Verschlußteil (2), das in dem Lager (4) unter geringem Betriebsspiel eine innenliegende Kammer (9) aufweist, die in Höhe der Außenfläche (10) des Verschlußteils (10) in mindestens zwei als innere bezeichnete Öffnungen (11, 12) mündet, die so angeordnet sind, daß bei einer einzigen Schwenkbewegung des Verschlußteils (2), die als Öffnungsstellung bezeichnet wird, zumindest einige der inneren Öffnungen (11, 12) desselben sich gegenüber mindestens einigen der äußeren Öffnungen (6, 7) des Hahnkorpus befinden, so daß ein Strömungsmittel von der Zulauföffnung zur Austrittsöffnung fließen kann,
- Dichtungsmitteln (13, 14, 15), die zwischen dem Verschlußteil (2) und dem Lager (4) angeordnet sind,
- einer Einrichtung (16) zur Betätigung des Verschlußteils (2), welche zumindest indirekt auf einem (17), dem sogenannten proximalen, der beiden proximal und distal gelegenen Enden (17, 18) gelagert ist,
- Mitteln (19) zur Verriegelung des Verschlußteils (2) in seinem Lager (4), die an dem als distal bezeichneten Ende (18) des Verschlußteils gelagert sind,
**dadurch GEKENNZEICHNET**, daß
- das distale Ende (18) des Verschlußteils (2) eine axial verlaufende innenliegende Austrittsöffnung (40) aufweist, und
- das Lager über seine beiden Enden auf der Außenseite des Korpus so mündet, daß die Kammer (9) über die am distalen Ende (18) des Verschlußteils liegende innere Öffnung immer mit einem der offenen Enden des Lagers in Verbindung steht.

2. Hahn nach Anspruch 1, dadurch **gekennzeichnet**, daß das distale Ende (18) des Verschlußteils direkt einen Teil einer Einrichtung (24) zur lösbaren Verbindung eines zusätzlichen Teils (25) trägt.

3. Hahn nach Anspruch 1, welcher außer den an den Enden des Verschlußteils angeordneten Dichtungen (13, 14) auf der gebogenen Fläche (26) des Verschlußteils einen zusätzlichen Runddichtring (15) trägt, der unter Anpassung an die Form der gebogenen Fläche auf dieser mit Hilfe von Befestigungsmitteln (27) gehalten ist, dadurch **gekennzeichnet**, daß die Mittel (27) zur Befestigung des zusätzlichen Runddichtrings (15) einen Ausschnitt (28) aufweisen, der in der Dicke des Verschlußteils ausgebildet und zur Aufnahme einer Platte (29) mit im wesentlichen komplementärer Form geeignet ist, wobei die außenliegenden Kanten (28a, 29a) des Ausschnitts (28) und der Platte (29) so geformt sind, daß sie eine Auskehlung (30) bilden, die am Eintritt in der Breite verengt ist, damit diese die zusätzliche Dichtung darin halten kann, wenn die Platte mit dem Ausschnitt zusammengebaut wird.

4. Hahn nach Anspruch 3, dadurch **gekennzeichnet**, daß der Grund (31) des Ausschnitts (28) mit Ausnahme eines Bereichs im wesentlichen flach ist, welcher mit Mitteln (32) zur Positionierung der Platte, beispielsweise einer mit einer Auskehlung zusammenwirkenden Rippe, versehen ist.

5. Hahn nach Anspruch 3 oder 4, dadurch **gekennzeichnet**, daß die Position der zusätzlichen Dichtung auf dem Verschlußteil so gewählt ist, daß bei geschlossener Stellung des Verschlußteils diese Dichtung die äußere Zulauföffnung so umschließt, daß die Zulaufleitung vom übrigen Teil des Hahns völlig getrennt ist.

## Claims

1. A parallel plug valve comprising:
- a body (3) bounding a cylindrical housing (4) for rotation having, in its wall (5), so-called external openings (6, 7, 8) to which a so-called inlet pipe (6a) and at least one outlet pipe (7a) join, the said pipe being called inlet and outlet according to the direction of circulation of a fluid.
- a closing device (2) which, being positioned in the aforementioned housing (4) with a low level of running clearance, has an internal chamber (9) which opens level with the external surface (10) of the closing device via at least two so-called internal openings (11, 12) which are positioned in such a manner that in a single orientation of the closing device (2), called the open position, at least some of the internal openings (11, 12) of the said closing device are opposite at least some of the external openings (6, 7) of the body of the valve so that a fluid can circulate from the inlet pipe to the outlet pipe,
- sealing means (13, 14, 15) arranged between the closing device (2) and the housing (4),
- means (16) for manoeuvring the closing device (2) supported at least indirectly by the so-called proximal end (17) of the proximal and distal ends (17, 18) of the closing device (2) and
- means (19) for locking the closing device (2) in its housing (4) which are mounted on the said distal end (18) of the closing device,
this valve being **CHARACTERISED** in that
- the distal end (18) of the closing device (2) has an axial opening with an internal outlet (40) and
- the housing opens to the exterior of the body by way of its two ends so that the chamber (9), by means of the internal opening positioned at the distal end (18) of the closing device, always connects to one of the open ends of the housing.

2. A valve according to Claim 1, **characterised** in that the distal end (18) of the closing device directly supports a portion of a means (24) for detachable assembly of a supplementary part (25).

3. A valve according to Claim 1 which, in addition to the seals (13, 14) positioned at the ends of the closing device, supports on the curved surface (26) of the closing device, a supplementary O-ring seal (15) which embraces the said curved surface and is held thereon by fastening means (27) **characterised** in that the fastening means (27) of the supplementary O-ring seal (15) comprise a mould (28) which, formed in the thickness of the closing device, is capable of housing a plate (29) of a substantially complementary shape, and the mould (28) and plate (29) have external edges (28a, 29a) shaped so as to form a groove (30) with its inlet reduced in width to be able to retain therein the supplementary seal when the plate is assembled with the mould.

4. A valve according to Claim 3, **characterised** in that the bottom (31) of the mould (28) is substantially flat except in one area which is provided with means (32) for positioning the plate, such as a rib co-operating with a groove.

5. A valve according to Claim 3 or 4 **characterised** in that the position of the supplementary seal on the closing device is chosen in such a manner that, when the closing device is in the closed position, this seal surrounds the external inlet opening so that the inlet pipe is completely separated from the rest of the valve.
